# FASCICULE DE BREVET EUROPEEN

(11) **EP 0 435 762 B1**
(45) Date de publication et mention de la délivrance du brevet: **29.11.1995**
(21) Numéro de dépôt: 90403735.5
(22) Date de dépôt: 21.12.1990
(51) Int. Cl.: H04N 1/32

(54) **Télécopieur à lecteur de disquette**
Fernkopierer mit Diskettenlesegerät
Telecopyer with diskette reading unit

(30) Priorité: 27.12.1989 FR 8917245
(43) Date de publication de la demande: 03.07.1991
(73) Titulaire: SOCIETE D'APPLICATIONS GENERALES D'ELECTRICITE ET DE MECANIQUE SAGEM, F-75783 Paris Cédex 16 (FR)
(72) Inventeur: Alos, Raphael, F-95520 Osny (FR)
(74) Mandataire: Bloch, Gérard

(56) Documents cités:
- EP-A- 0 042 071
- WO-A-88/06824
- DE-A- 3 447 466
- GB-A- 2 082 013
- GB-A- 2 166 620
- GB-A- 2 211 698
- US-A- 3 751 582

## Description

La présente invention a trait à la combinaison des usages d'un télécopieur et d'équipements de micro-informatique.

Un télécopieur classique comporte un ensemble de matériels électromécaniques (hardware) et un ensemble de logiciels (software).

A l'ensemble de matériels appartiennent, reliés par des bus, notamment
- un microprocesseur,
- un analyseur (scanner),
- une imprimante,
- un module de communication, destiné à être relié à un réseau téléphonique commuté, avec
   . un modem,
   . un sérialisateur-désérialisateur,
- des mémoires.

Parmi les mémoires, se trouvent
- une mémoire de programmes, qui peut être une mémoire ROM sauvegardable ou un disque dur,
- une mémoire centrale de travail, qui est généralement une mémoire vive RAM, contenant les variables des programmes,
- une mémoire d'initialisation pour le chargement, à la mise sous tension, de la mémoire centrale.

A l'ensemble de logiciels, contenus dans la mémoire de programmes, appartiennent
- une couche de gestion des matériels OS (operating system),
- trois couches, respectivement
   . d'analyse,
   . d'impression,
   . de protocole de communication,
- une couche de logiciels d'application.

Les deux couches de gestion et d'application sont fonctionnellement reliées entre elles et, chacune, aux trois autres couches intermédiaires, entre lesquelles des dialogues bidirectionnels peuvent être établis.

Parmi les logiciels d'application se trouvent
- le logiciel de dialogue entre l'opérateur et le télécopieur,
- les logiciels de lancement de l'analyse, de l'impression, de la communication.

On a donc cherché, depuis quelque temps, à combiner les usages d'un télécopieur d'équipements de microinformatique, comme par exemple un microordinateur, notamment de type PC ou compatible, en particulier de traitement de texte, l'un des problèmes à résoudre étant de saisir un document sur un microordinateur et, à l'aide d'un télécopieur, de l'envoyer, par le réseau téléphonique commuté, à un correspondant ou à un ensemble de correspondants aussi dotés, chacun, d'un télécopieur.

Pour résoudre ce problème on a déjà proposé deux solutions.

La première solution consiste, à l'aide d'un logiciel d'édition de texte ou d'édition graphique, à éditer le document sur l'imprimante du microordinateur, à prendre le document puis à l'émettre en télécopie sur le télécopieur. Cette solution présente l'inconvénient d'une manipulation de papier et surtout d'une dégradation de la qualité entre la saisie du document et sa réception par les correspondants, à cause de l'impression au niveau du microordinateur et de l'analyse au niveau du télécopieur émetteur.

La deuxième solution consiste à transférer les données du document du microordinateur au télécopieur, de mémoire à mémoire, sans édition, par une liaison série à trois fils combinée à un logiciel de dialogue entre les deux appareils. Avec cette solution, il n'y a plus de dégradation de la qualité du fait de l'impression et de l'analyse mais c'est la liaison entre les deux appareils, génératrice de parasites, qui en introduit une. En outre, la vitesse de transmission des données sur la liaison série est limitée, généralement à 9600 bauds, et cette liaison matérielle entre les deux appareils interdit qu'ils ne soient par trop éloignés l'un de l'autre.

La présente invention vise donc à résoudre, en évitant les inconvénients des solutions de l'art antérieur, le problème de l'émission en télécopie d'un document saisi sur un microordinateur et à proposer un télécopieur perfectionné.

La présente invention, par conséquent, concerne un télécopieur comportant un microprocesseur, un ensemble de modules matériels d'analyse, d'impression et de communication, une mémoire centrale de travail et une mémoire de programmes supportant un ensemble de couches intéractives de logiciels de gestion, d'application et d'analyse, d'impression et de communication,
. étant agencé pour être associé à un lecteur de disquette contenant un disque souple de stockage de données d'au moins un document,
. et comportant un contrôleur de disquette agencé pour être relié au lecteur de disquette,
   télécopieur caractérisé par le fait que
. les couches de logiciels sont agencées pour que l'association du lecteur implique, sans modification des interactions de toutes les couches, l'extension des seules couches de gestion et d'application respectivement au pilotage de la disquette, d'une part, et au dialogue entre un opérateur et le lecteur, d'autre part.

L'invention repose donc sur l'idée très simple que les données d'un document saisies sur microordinateur peuvent ensuite être stockées sur un disque souple (floppy disc) de disquette.

Que le lecteur de disquette soit connecté ou intégré au télécopieur, il suffit donc à l'opérateur, pour télécopier le document, de sortir la disquette du microordinateur, de la prendre et de l'introduire dans le lecteur du télécopieur. Le transfert du document du microordinateur au télécopieur s'effectue donc très simplement et rapidement de mémoire à mémoire, dans des conditions de fiabilité assurées et sans altération de la qualité. En outre, le microordinateur et le télécopieur peuvent être très éloignés l'un de l'autre.

La fonction du contrôleur est essentiellement de piloter le moteur d'entraînement du disque souple de la disquette ainsi que sa tête de lecture-écriture et d'assurer le chargement des données du disque souple dans la mémoire centrale.

L'invention tire son activité inventive principalement de l'organisation intéractive de l'ensemble des couches de logiciels qui permet de proposer, non seulement un télécopieur à lecteur de disquette, mais également un télécopieur perfectionné, avec lecteur de disquette en option, la connection opérationnelle ultérieure du lecteur de disquette s'effectuant par simple extension tant des éléments matériels que des logiciels du télécopieur, dans des conditions de coût et de délai attrayantes pour l'utilisateur.

Grâce aux couches de logiciels de gestion et d'application étendues, il est facile d'y intégrer respectivement un logiciel de gestion de fichier d'adresses et un logiciel de routage pour envoyer un même document, ou des différents, à un ensemble de correspondants.

Le télécopieur équipé d'un lecteur de disquette peut naturellement aussi servir d'imprimante au microordinateur, si le fichier d'adresses contient celle du télécopieur de l'invention. Si les documents à faire émettre par le télécopieur ont été saisis par le microordinateur dans un format autre que le format télécopie, s'il s'agit par exemple d'un texte, d'un document mixte et non pas d'une image télécopie, la couche de logiciels d'application peut comporter un logiciel de conversion pour adapter le format du document, ou le "formatter", au format télécopie.

Si le télécopieur peut comporter, comme mémoire de programmes, une mémoire ROM, l'association du lecteur impliquant alors que cette mémoire soit remplacée par une autre mémoire ROM de plus grande capacité, le télécopieur de l'invention comporte de préférence un disque dur de programmes offrant l'avantage de pouvoir recevoir, sans modification matérielle, les logiciels nécessités par l'association du lecteur de disquette.

L'invention sera mieux comprise à l'aide de la description suivante du télécopieur perfectionné de cette invention, en référence aux dessins annexés, sur lesquels
- la figure 1 représente la structure matérielle schématique du télécopieur et
- la figure 2 représente l'organisation fonctionnelle intéractive des couches de logiciels supportées par la mémoire de programmes du télécopieur de la figure 1.

Le télécopieur de l'invention comporte, de façon classique, un microprocesseur 1, avec des bus de données et d'horloge 2, un module d'analyse de données, ou scanner, 3, une imprimante 4, un module de communication à connecter à un réseau téléphonique commuté, avec, notamment, un sérialisateur-désérialisateur 5 et un modem 6 en série, une mémoire centrale de travail 7, une mémoire de programmes 8 et une mémoire d'initialisation 9, tous ces composants étant reliés aux bus 2 du microprocesseur 1.

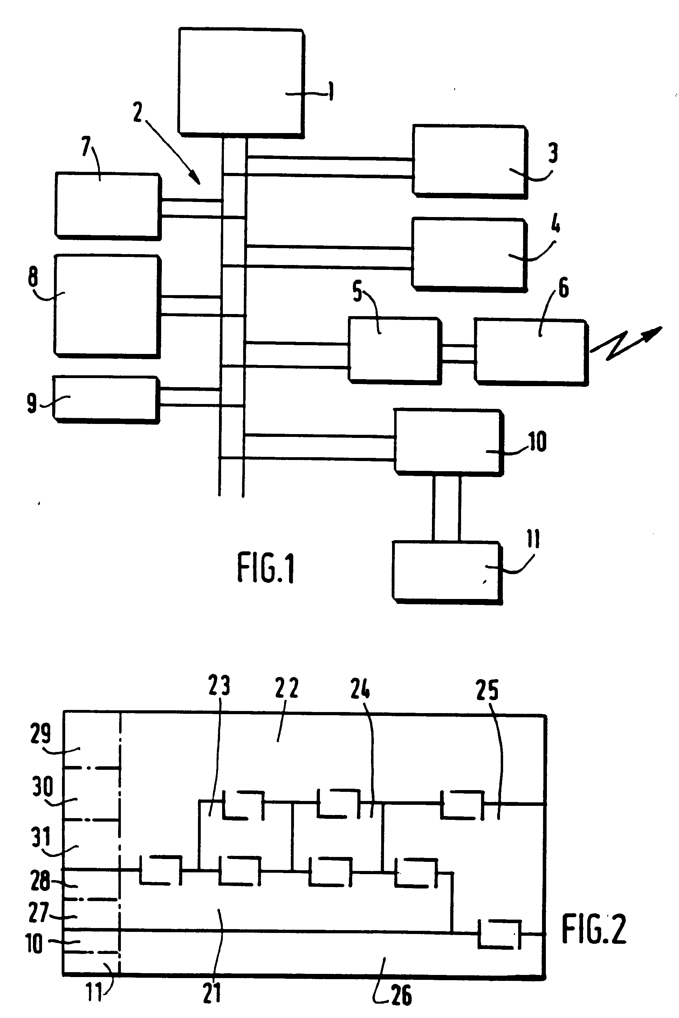

Le télécopieur comporte encore un module 10 de contrôle d'un lecteur de disquette 11, représenté, sur la figure 1, connecté au contrôleur 10. Le lecteur 11 est soit intégré au télécopieur, soit livré en option dans un boîtier.

Pour éviter d'avoir à la changer en cas d'adjonction ultérieure d'un boîtier lecteur de disquette, la mémoire de programmes 8 du télécopieur est ici un disque dur.

L'ensemble des composants du télécopieur qui viennent d'être décrits, et qui constituent ce qu'on peut appeler une couche matérielle, sont pilotés et contrôlés pour des logiciels répartis dans d'autres couches, qu'on peut appeler couches logiques ou de logiciels. En référence à la figure 2, toutes ces couches sont intéractives, chaque intéraction étant symbolisée par un dessin de chicane. Les couches logiques sont supportées par le disque dur 8.

Parmi ces couches logiques, on trouve deux couches externes interactives, l'une de gestion 21, l'autre d'application 22, et trois couches intermédiaires, à savoir une couche d'analyse 23, une couche d'impression 24 et une couche de communication 25, avec une interaction de chacune de ces trois couches, d'une part, et de chacune des deux couches de gestion 21 et d'application 22, d'autre part, ainsi qu'avec une interaction de la couche de communication 25 et de la couche matérielle 26.

Grâce à cette organisation des couches, les fonctions associées au lecteur de disquette 11 et à son contrôleur 10 de la couche 26 sont séparées des fonctions associées aux autres composants matériels du télécopieur. La couche 21 de gestion des matériels comporte le logiciel 27 de pilotage de disquette et le logiciel 28 de gestion de fichier et la couche d'application 22 comporte le logiciel 29 de dialogue, par l'intermédiaire du télécopieur, entre l'opérateur du télécopieur et le lecteur 11, un logiciel de routage 30 et un logiciel 31 de conversion de format. La couche d'application 22 contient en outre le logiciel de dialogue entre l'opérateur et le télécopieur et les logiciels de lancement de l'analyse, de l'impression et de la communication.

Pour être complet, on notera que c'est le logiciel de dialogue 29 qui permet de contrôler et de lire un disque souple de disquette et de provoquer le transfert, par l'intermédiaire des bus 2, du contrôleur 10 et de la tête de lecture du lecteur 11, des données du disque souple de disquette dans la mémoire centrale de travail 7 du télécopieur, avant d'être traitées et émises en ligne par le module de communication 5, 6 et inversement.

Grâce au télécopieur qui vient d'être décrit, et ayant, à l'aide d'un microordinateur, inscrit sur le disque souple d'une disquette une série de documents et une liste de destinataires dotés chacun d'un télécopieur, on peut télécopier ces documents, une fois mis au format télécopie, à leurs destinataires respectifs.

## Revendications

1. Télécopieur comportant un microprocesseur (1), un ensemble de modules matériels d'analyse (3), d'impression (4) et de communication (5, 6), une mémoire centrale de travail (7) et une mémoire de programmes (8) supportant un ensemble de couches interactives de logiciels de gestion (21), d'application (22) et d'analyse (23), d'impression (24) et de communication (25),
. étant agencé pour être associé à un lecteur de disquette (11) contenant un disque souple de stockage de données d'au moins un document,
. et comportant un contrôleur de disquette (10) agencé pour être relié au lecteur de disquette (11),
télécopieur caractérisé par le fait que
. les couches de logiciels sont agencées pour que l'association du lecteur (11) implique, sans modification des interactions de toutes les couches, l'extension des seules couches de gestion (21) et d'application (22) respectivement au pilotage de la disquette (27), d'une part, et au dialogue entre un opérateur et le lecteur (29), d'autre part.

2. Télécopieur selon la revendication 1, auquel un lecteur de disquette (11) est associé.

3. Télécopieur selon la revendication 2, dans lequel est intégré le lecteur de disquette (11).

4. Télécopieur selon l'une des revendications 2 et 3, dans lequel la couche de gestion (21) comporte un logiciel de gestion de fichier (28) et la couche d'application (22) comporte un logiciel de routage (30).

5. Télécopieur selon l'une des revendications 2 à 4, dans lequel la couche d'application (22) comporte un logiciel de conversion de format (31).

6. Télécopieur selon l'une des revendications 1 à 5, dans lequel la mémoire de programmes (8) est une mémoire ROM.

7. Télécopieur selon I'une des revendications 1 à 5, dans lequel la mémoire de programmes (8) est un disque dur.

## Patentansprüche

1. Telekopierer mit einem Mikroprozessor (1), einer Gruppe von Baumodulen zur Abtastung (3), zum Druck (4) und zur Kommunikation (5,6), einem zentralen Arbeitsspeicher (7) und einem Programmspeicher (8), der eine Gruppe von interaktiven Schichten von Programmen zur Steuerung (21), zur Anwendung (22) und zur Abtastung (23), zum Druck (24) und zur Kommunikation (25) aufweist,
der dazu eingerichtet ist, mit einem Diskettenlaufwerk (11) verbunden zu sein, das eine Diskette enthält, die zur Speicherung von Daten von wenigstens einem Dokument eingerichtet ist,
und einen Diskettenkontroller (10) aufweist, der dazu eingerichtet ist, mit dem Diskettenlaufwerk (11) verbunden zu sein,
wobei der Telekopierer dadurch gekennzeichnet ist, das die Programmschichten 10 gestaltet sind, daß die Zusammenwirkung mit dem Laufwerk (11), ohne Veränderung des Zusammenwirkens aller Schichten, die Erweiterung nur der Steuerschicht (21) bzw. der Anwendungsschicht (22) einerseits zur Steuerung der Diskette (27) und andererseits für den Dialog zwischen einer Bedienperson und dem Laufwerk (29) erfolgt.

2. Telekopierer nach Anspruch 1, der mit dem Diskettenlaufwerk (11) verbunden ist.

3. Telekopierer nach Anspruch 2, bei dem das Diskettenlaufwerk (11) integriert ist.

4. Telekopierer einem der Ansprüche 2 oder 3, in dem die Steuerschicht (21) ein Dateisteuerprogramm (28) und die Anwendungsschicht (22) ein Sortierensprogramm (30) aufweist.

5. Telekopierer nach einem der Ansprüche 2 bis 4, bei dem die Anwendungsschicht (22) ein Programm zur Formatumwandlung (31) aufweist.

6. Telekopierer nach einem der Ansprüche 1 bis 5, bei dem der Programmspeicher ein ROM ist.

7. Telekopierer nach einem der Ansprüche 1 bis 5, bei dem der Programmspeicher (8) eine Festplatte ist.

## Claims

1. Facsimile machine comprising a microprocessor (1), a group of hardware modules for analysis (3), printing (4) and communication (5, 6), a central working memory (7) and a program memory (8) holding a group of interactive layers of software for management (21), application (22) and analysis (23), printing (24) and communication (25),
· being arranged to be associated with a disk reader (11) containing a floppy disk for storing data of at least one document,
· and comprising a disk controller (10) arranged to be connected to the disk reader (11),
the facsimile machine being characterised in that
· the software layers are arranged so that the association of the reader (11) implies, without modification of the interaction of all the layers, the extension of only the management (21) and application (22) layers respectively to the driving of the disk (27), on the one hand, and to the dialogue between an operator and the reader (29), on the other hand.

2. Facsimile machine according to claim 1, with which a disk reader (11) is associated.

3. Facsimile machine according to claim 2, in which the disk reader (11) is integrated.

4. Facsimile machine according to one of claims 2 and 3, in which the management layer (21) comprises file managing software (28) and the application layer (22) comprises routing software (30).

5. Facsimile machine according to one of claims 2 to 4 in which the application layer (22) comprises format conversion software (31).

6. Facsimile machine according to one of claims 1 to 5, in which the program memory (8) is ROM.

7. Facsimile machine according to one of claims 1 to 5 in which the program memory (8) is a hard disk.
